# EUROPEAN PATENT SPECIFICATION

(11) **EP 1 527 567 B1**
(45) Date of publication and mention of the grant of the patent: **02.04.2008**
(21) Application number: 03733760.7
(22) Date of filing: 18.06.2003
(51) Int. Cl.: H04L 12/56, H04L 12/22, G06F 15/16

(54) **APPARATUS AND METHOD FOR CONVEYING PRIVATE INFORMATION WITHIN A GROUP COMMUNICATION SYSTEM**
VORRICHTUNG UND VERFAHREN ZUM WEITERLEITEN VON PRIVATER INFORMATION IN EINEM GRUPPENKOMMUNIKATIONSYSTEM
APPAREIL ET PROCEDE PERMETTANT D'ACHEMINER DES INFORMATIONS PRIVEES AU SEIN D'UN SYSTEME DE COMMUNICATION DE GROUPE

(30) Priority: 19.06.2002 SE 0201879
(43) Date of publication of application: 04.05.2005
(73) Proprietor: Google Sweden Technique AB, 114 87 Stockholm (SE)
(72) Inventor: PARNES, Peter, S-977 54 Lulea (SE)
(74) Representative: Herbjörnsen, Rut
(86) International application number: PCT/SE2003/001030
(87) International publication number: WO 2004/002086

(56) References cited:
- US-A1- 2002 057 663
- US-B1- 6 490 586
- SMIRNOV MICHAEL ET AL.: 'Programmable group communication services over IP multicast' HIGH PERFORMANCE SWITCHING AND ROUTING. ATM. PROCEEDINGS OF THE IEEE CONFERENCE 26 June 2000 - 29 June 2000, pages 281 - 289, XP001075713
- LEVINE BRIAN NEIL ET AL.: 'Improving internet multicast with routing labels' NETWORK PROTOCOLS. PROCEEDINGS 28 October 1997 - 31 October 1997, pages 241 - 250, XP010258705
- JENKINS KATE ET AL.: 'A gossip protocol for subgroup multicast' DISTRIBUTED COMPUTING SYSTEMS WORKSHOP 16 April 2001 - 19 April 2001, pages 25 - 30, XP002967325

## Description

### Technical field of the invention

The present invention relates to an apparatus and method for conveying private information within an established group communication. More in detail, the invention relates to communication between two parties within an established IP-multicast group where the group involves more than two participants.

### Background of the invention

Media information can be distributed within a communicating group of users by means of so-called IP-multicast transmission. This multicast transmission technique relies on the principle that the information is transmitted to a multicast group and further copied in the network to participating parties who require a copy of the information.

Public information in a network of the above kind is distributed within the group of users by IP-multicast in the form of streamed media. However, there may be a need for distribution of information of particular interest to only a sub-part of participating users, and to distribute private messages exclusively within that sub-part of the participating group. According to prior art technology, in such a case a special communication channel is established between the sub-group members in parallel with the public multicast communication channel. However, network constraints, such as firewalls or other access limiting security arrangements may impede or even preclude transmission of non-multicast communication from reaching the intended recipient. This is a drawback associated with prior art, which limits the deployment of applications for group communication. Today, the trend in society is that measures are taken in the direction of enhanced security, and the security consciousness among users and network administrators has increased. Therefore the need for an arrangement enabling communication, while simultaneously respecting network among users and network administrators has increased. Therefore the need for an arrangement enabling communication, while simultaneously respecting network constraints and limitations, such as firewalls and other security measures, has become even greater than before.

Document "Application-Layer Group Communication Server for Extending Reliable Multicast Protocols Services" Proceedings of the 1997 International Conference on Network Protocols (ICNP '97) by Al-Shaer et al. discloses a system wherein filtering of messages is performed by an intermediate server.

### Summary of the invention

It is therefore an object of the present invention to alleviate the previously mentioned shortcomings of prior art associated with group communication services. This is accomplished by an apparatus and method for distribution of a streamed signal within a group of users in a computer network, the users accessing client terminals for participation in a multicast session, the apparatus comprising,
connecting links adapted to connect the client terminals of users and related equipment, such as capturing means, to the multicast session, preferably via the Internet or other interconnecting network,
an extension header being added to data packets of the streamed signal, the extension header comprising identification data relating to the intended recipient of a packet,
characterised in that
a filtering means associated with the receiving client adapted to filter out data packets having the address of the recipient and receiving the streamed signal.

Only one copy of the information is transmitted from the sender independently of the amount of receivers. Within a multicast group, as previously described, there may be a need for transmitting private or confidential information exclusively within only a subpart of the group, usually transmission one to one. By means of additional encryption, there is a further possibility of making also strictly confidential information which is distributed accessible to only intended recipients. This could be critical information not to be disclosed to all parties in a business negotiation, keys and solutions to problems during an electronic educational meeting, individual tuition during an electronic meeting being part of distance learning, foreign affairs or political relations, etc.

The present invention, which provides a solution to the mentioned distribution and confidentiality problem is advantageous in many ways. The previous need for establishing a dedicated unicast connection in parallel with the existing multicast connection is no longer necessary. Communication of non-public interest, possibly of private or sensitive nature, may be executed during a public session. The advantage of the invention is hence the ability to reuse the existing communications channel while maintaining the confidentiality if this is desirable.

Due to network constraints it is desirable to send also this information using IP-multicast even though it will reach non-interested receivers. These network constraints include for example firewalls and other corresponding security arrangements where the receiver might only have IP-multicast access or only access to a portal, i.e. a so-called reflector.

### Brief description of the drawings

The features, objects, and further advantages of this invention will become apparent by reading this description in conjunction with the accompanying drawings, in which like reference numerals refer to like elements and in which:
Fig 1 illustrates a schematic overview of the apparatus for distribution of a streamed signal within a group of users according to the present invention.
Fig 2 is a signalling chart representing the content of a header added to distributed data packets according to the present invention.

### Detailed description

The following description is of the best mode presently contemplated for practising the invention. The description is not to be taken in a limiting sense, but is made merely for the purpose of describing the general principles of the invention. The scope of the invention should be ascertained with reference to the issued claims.

According to the present invention, the Internet is used as a means for distribution of streamed media. Use of the Internet is the optimal solution as long as it provides a reliable connection having sufficient transmission rates, without network congestion problems. The invention does not lead to undesired overload within the computer networks with unnecessary amounts of raw data, and the raw data can be compressed to require even less transmission capacity. The amount of data distributed through the network is reduced, since the data stream sent as a copy from one client terminal to other associated client terminals can be compressed, as a result of which the total amount of data transmitted over the network is reduced.

The implementation of the invention is based on addition of a special header to private packets being part of transmitted information in a network. The packets identify the receivers and these packets are filtered on the receiving side of the distribution channel, although every participating member in a communication group actually receives the identifiable data. This is implemented in practice using a special header extension which is available in the Real-time Transport Protocol standard for identifying that header extensions actually exist in the packet.

The invention is not limited to any particular type of data but is applicable for any type of information transmitted, such as for audio, video, chat, etc.

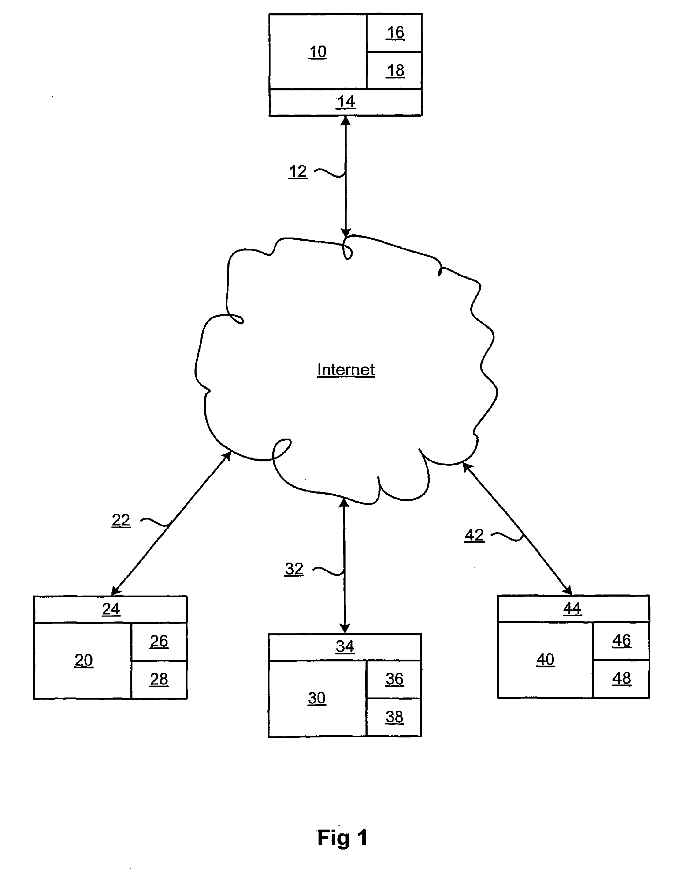

With reference to Fig 1, a schematic overview illustrates the apparatus for distribution of a streamed signal within a group of users in a computer network. A plurality of client terminals 10,20,30,40 connected to a distributing globally connected computer network, such as the Internet via connecting links 12, 22, 32, 42. The connecting lines may be various wired connections, but likely for use already today or at least in a near future are also wireless transmission technologies, such as access technology based on infrared, Bluetooth or wireless-LAN. Connection means used in association with the present invention will be developing with new and emerging access technologies. To each host is coupled image capturing means 16, 26, 36, 46, preferably a so-called web-camera, a digital camera or a digital video camera.

Moreover, audio capturing means 18, 28, 38, 48, in the form of a microphone arrangement is connected to each client terminal as well as filtering means 14, 24, 34, 44.

The client terminals themselves arrange the distribution of the data stream to other multicast group members. This is an autonomous function between client terminals as soon as the participants in a group are defined and authorised. There may be arranged a central administration entity, preferably in the form of a portal handling accessibility of users willing to participate in a multicast group of users. Necessary identification, authentication and authorisation of users to a group is carried out by means of the central administration entity, i.e, the portal interfacing between the entity and users, but a detailed description of those steps clearly goes beyond the scope of this application and is therefore omitted here.

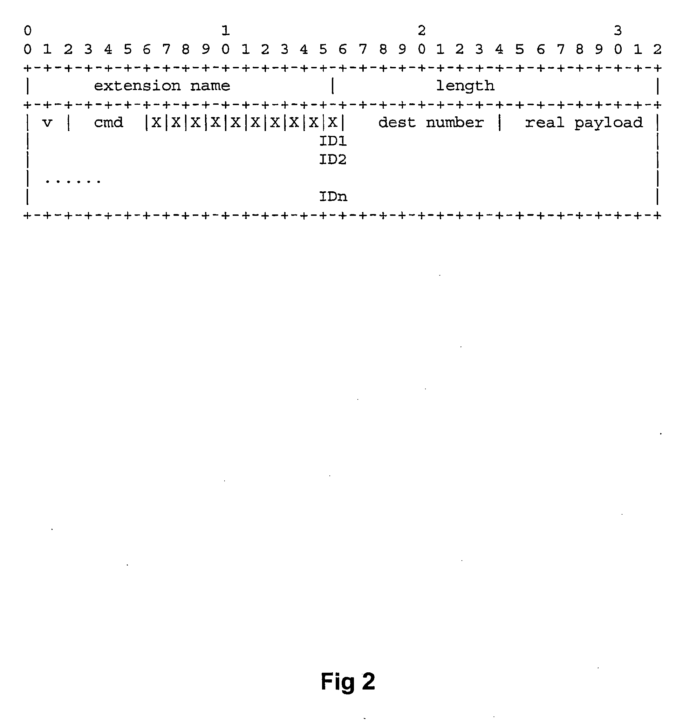

With particular reference to Fig 2, parts of the previously mentioned Real-time Transfer Protocol (RTP) is depicted. The protocol comprises a part of the header called the extension bit. When this bit is determined, the normal RTP header is followed by a new RTP header extension having a content of at least 4 bytes of data. This new extension header is placed between the RTP header and the RTP payload, which contains the actual content to be distributed, such as for example the video stream of a multicast session.

The extension name is set to a common identifier, identifying this extension as a filter destination. In accordance with a preferred embodiment of the invention, the filter destination header is identified by the bytes numbered 77 and 65. The "length" field is the total length of the header extension including the first 4 bytes. Reference is here made to the RTP specification IETF RFC1889 (request for comments) where the first 4 bytes are defined. "v" which is found far left in Fig 2 defines two bits primarily intended for making changes possible within the header extension. "X" denotes an unused field in the header. "cmd" is a command that allows alternative use of the header extension. The reason for this possible alternative use is that a stream can only contain one RTP header extension per packet if it is to conform with the RTP specification. In this case the command cmd is set to 0. "dest number" is the number of destinations in this particular packet, which may be any number relating to the size of the sub-group of intended recipients. "real payload" is the type of data being sent in this packet. The real RTP header contains a payload type field and just as the case of other applications, and it is not intended to be possible to decode the data by leaving out the extension header. This extension header is originally set to the original value of 127. This number denotes, in accordance with the mentioned RTP specification, "unspecified" and then includes the real payload type. This will lead to applications that do not interpret this header extension to dispose of the packet. ID1, ID2, ... are the unique identifiers for the intended destination, i.e. who the intended recipient of this packet is.

Realisation of the addition of an extension header to a data packet can be carried out in accordance with the following embodiment. The sender is sending data to every-body in the group, the group by way of example comprising three users. There users are user1 (id=10), user2 (id=20) and user3 (id=30). For any reason, the sender of data may be interested in sending a data packet to only "user1" and "user3". This is denoted a private audio conversation, or a so-called whisper within the group communication. The new packet is composed with the header extension bit set to 1 and header extension is added after the RTP header as previously described with reference to Fig 2. This extension header will comprise "dest nummer" = 2 and "ID1" = 10 and "ID2" = 30. Subsequently a packet is sent to the whole group and is received by all three users (user1, user2 and user3). The second user, i.e. user2 will also receive this packet and decode the extension header but will not find itself in the destinations list and it will therefore dispose of the packet.

However, the other users, i.e. user1 and user3, will decode the extension header, find themselves in the destination list and handle the data according to the payload type defined in the "real payload" type field.

In accordance with the present invention, software is developed in parallel with the apparatus for distribution of signals. The software resides in a memory associated with said apparatus. The software is designed for instructing the hardware to carry out sequential method steps previously described in this application.

## Claims

1. Apparatus for distribution of a streamed signal within a group of users in a computer network, the users accessing client terminals (10, 20, 30, 40) for participation in a multicast session, the apparatus comprising,
connecting links (12, 22, 32, 42) adapted to connect the client terminals of users and related equipment, (16, 26...; 18, 28...), to the multicast session, via the Internet or other interconnecting network, **characterised by**
means for adding an extension header to data packets of the streamed signal, the extension header comprising identification data relating to the intended recipient of a packet, and
a filtering means (14, 24, 34, 44) arranged at the receiving client adapted to filter out data packets comprising identification data in the extension header identifying the recipient and receiving the streamed signal.

2. Apparatus for distribution of a streamed signal according to claim 1, **characterised in that**
the transmitted signal is encoded by the sending client terminal and decoded by the intended recipient only at the receiving client terminal by means of a separately provided decryption key.

3. Method for distributing a streamed signal via the Internet or other interconnecting network within a group of users in a computer network, the users accessing client terminals (10, 20, 30, 40) for participation in a multicast session, the method comprising the steps of,
**characterised by**
adding an extension header to data packets of the streamed signal, the extension header identifying the intended recipient of a packet, and
filtering out data packets comprising identification data in the extension header identifying the recipient and allowing them to pass through a filtering means (14, 24, 34, 44), which is arranged at the receiving client.

4. Computer program product for distributing a streamed signal within a group of users in a computer network, the computer program being adapted when run on a computer to carry out each of the steps of the method claim 3.

## Patentansprüche

1. Gerät zur Verteilung eines Stromsignals innerhalb einer Gruppe von Benutzern in einem Computer-Netzwerk, wobei die Benutzer auf Client-Endgeräte (10, 20, 30, 40) zur Teilnahme an einer Multicast-Sitzung zugreifen, wobei das Gerät umfasst,
verbindende Verbindungen (12, 22, 32, 42), die angepasst sind, die Client-Endgeräte der Benutzer und verwandte Ausrüstung (16, 26 ...; 18, 28...) mit der Multicast-Sitzung über das Internet oder ein anderes verbindendes Netzwerk zu verbinden,
**gekennzeichnet durch**
eine Vorrichtung zum Hinzufügen eines Erweiterungs-Headers zu Datenpaketen des Stromsignals, wobei der Erweiterungs-Header Identifikationsdaten umfasst, die sich auf den beabsichtigten Empfänger eines Paketes beziehen und
eine filternde Vorrichtung (14, 24, 34, 44), die an dem empfangenden Client angeordnet ist, der angepasst ist, Datenpakete mit Identifikationsdaten in dem Erweiterungs-Header herauszufiltern, die den Empfänger identifizierten und das Stromsignal zu empfangen.

2. Gerät zur Verteilung eines Stromsignals nach Anspruch 1, **dadurch gekennzeichnet, dass**
das übertragene Signal von dem sendenden Client-Endgerät kodiert wird und von dem vorgesehenen Empfänger lediglich an dem empfangenden Client-Endgerät mittels eines getrennt-bereitgestellten Entschlüsselungsschlüssels dekodiert wird.

3. Verfahren zum Verteilen eines Stromsignals über das Internet oder ein anderes verbindendes Netzwerk innerhalb einer Gruppe von Benutzern in einem Computer-Netzwerk, wobei die Benutzer auf Client-Geräte (10, 20, 30, 40) zur Teilnahme an einer Multicast-Sitzung zugreifen, wobei das Verfahren die Schritte umfasst, **gekennzeichnet durch**
Hinzufügen eines Erweiterungs-Headers zu Datenpaketen des Stromsignals, wobei der Erweiterungs-Header den vorgesehenen Empfänger eines Paketes identifiziert und
Herausfiltern von Datenpaketen mit Identifikationsdaten in dem Erweiterungs-Header, der den Empfänger identifiziert und es diesem zu erlauben, **durch** eine filternde Vorrichtung (14, 24, 34, 44) zu passieren, die an den empfangenden Client angeordnet ist.
Computer-Programmprodukt zum Verteilen eines Stromsignals innerhalb einer Gruppe von Benutzern in einem Computer-Netzwerk, wobei das Computer-Programm angepasst ist, wenn dieses auf einem Computer laufengelassen wird, jeden der Schritt des Verfahrensanspruchs 3 auszuführen.

## Revendications

1. Appareil permettant la distribution d'un signal de transmission en continu dans un groupe d'utilisateurs dans un réseau informatique, les utilisateurs ayant accès à des terminaux clients (10, 20, 30, 40) pour participer à une session de multidiffusion, l'appareil comprenant,
des liaisons de connexion (12, 22, 32, 42) adaptées pour connecter les terminaux clients des utilisateurs et l'équipement relié (16, 26... ; 18, 28...) à la session de multidiffusion, via l'internet ou un autre réseau d'interconnexion,
**caractérisé par**
un moyen pour ajouter un en-tête d'extension aux paquets de données du signal de transmission en continu, l'en-tête d'extension comprenant des données d'identification concernant le destinataire visé d'un paquet, et
un moyen de filtrage (14, 24, 34, 44) disposé au niveau du client récepteur adapté pour filtrer des paquets de données comprenant des données d'identification dans l'en-tête d'extension identifiant le destinataire et recevant le signal de transmission en continu.

2. Appareil permettant la distribution d'un signal de transmission en continu selon la revendication 1, **caractérisé en ce que**
le signal transmis est codé par le terminal client expéditeur et décodé par le destinataire visé seulement au niveau du terminal client récepteur au moyen d'une clé de déchiffrement fournie séparément.

3. Méthode permettant la distribution d'un signal de transmission en continu via l'internet ou un autre réseau d'interconnexion dans un groupe d'utilisateurs dans un réseau informatique, les utilisateurs ayant accès à des terminaux clients (10, 20, 30, 40) pour participer à une session de multidiffusion, la méthode comprenant les étapes consistant à,
**caractérisé par**
ajouter un en-tête d'extension aux paquets de données du signal de transmission en continu, l'en-tête d'extension identifiant le destinataire visé d'un paquet, et
filtrer des paquets de données comprenant des données d'identification dans l'en-tête d'extension identifiant le destinataire et leur permettre de passer par un moyen de filtrage (14, 24, 34, 44), qui est disposé au niveau du client récepteur.

4. Produit de programme informatique permettant de distribuer un signal de transmission en continu dans un groupe d'utilisateurs dans un réseau informatique, le programme informatique étant adapté lorsqu'il est exécuté sur un ordinateur pour effectuer chacune des étapes de la méthode selon la revendication 3.
